# EUROPÄISCHE PATENTSCHRIFT

(11) **EP 2 382 857 B1**
(45) Veröffentlichungstag und Bekanntmachung des Hinweises auf die Patenterteilung: **18.06.2014**
(21) Anmeldenummer: 11155745.0
(22) Anmeldetag: 24.02.2011
(51) Int. Cl.: A01F 12/18, A01F 12/56

(54) **Drescheinrichtung für Mähdrescher**
Thresher device for a combine harvester
Dispositif de battage pour moissonneuse-batteuse

(30) Priorität: 28.04.2010 DE 102010016670
(43) Veröffentlichungstag der Anmeldung: 02.11.2011
(73) Patentinhaber: CLAAS Selbstfahrende Erntemaschinen GmbH, 33428 Harsewinkel (DE)
(72) Erfinder: Bühlmeier, Robert, 33442, Herzebrock-Clarholz (DE)
(74) Vertreter: Belda, Stefan Johannes

(56) Entgegenhaltungen:
- EP-A1- 1 374 662
- DE-A1- 2 133 448
- DE-A1-102007 006 926
- FR-A1- 2 658 983
- US-A1- 2002 056 262

## Beschreibung

Die Erfindung bezieht sich auf eine Drescheinrichtung für Mähdrescher mit einer Dreschtrommel, einem zugeordneten Dreschkorb und mindestens einer der Dreschtrommel nachgeordneten Trommel, nach dem Oberbegriff des Patentanspruches 1.

An bekannten Ein- und Mehrtrommeldrescheinrichtungen von Mähdreschern sind der Dreschtrommel stets Wendetrommeln und/oder Abscheidetrommeln nachgeordnet, die das ausgedroschene Erntegut zu den Restkornabscheidevorrichtungen in Form von Strohschüttlern oder rotierenden Abscheideeinrichungen weiterfördern. Derartige Wendetrommeln und/oder Abscheidetrommeln sind bereits in verschiedenen Ausführungen und Anordnungen bekannt.

So ist beispielsweise in der DE 196 31 866 A1 eine Drescheinrichtung für einen Mähdrescher beschrieben, bei der eine der Dreschtrommel nachgeordnete Wendetrommel eine von der Dreschtrommel abhängige Drehzahl beziehungsweise Umfangsgeschwindigkeit aufweist. Dabei wird diese Abhängigkeit in Stufen über ein Getriebe oder stufenlos über einen Variatorantrieb eingestellt.

Aus der DE 10 2007 006 926 A1 ist weiterhin eine Antriebseinrichtung für eine Dreschtrommel und eine Wendetrommel bekannt, bei der primär die Dreschtrommel und von dieser aus die Wendetrommel über einen Keilriemenbetrieb direkt angetrieben wird, wobei die Wendetrommel mit der gleichen oder einer etwas höheren Drehzahl oder Umfangsgeschwindigkeit als die Dreschtrommel umläuft.

Bei beiden bekannten Antriebsvarianten ist jedoch keine bestimmte Lagepositionierung der Dreschtrommel und der Wendetrommel zueinander vorgesehen und aufgrund der konstruktiven Antriebsausführung auch nicht möglich. Dies hat zur Folge, dass beispielsweise bei einem Gegenüberstand einer am Umfang der Wendetrommel angeordneten Förderleiste vom Zwischenraum zweier benachbarter Dreschleisten der Dreschtrommel, die Wendetrommelleiste Erntegut in den Zwischenraum zwischen den Dreschleisten drückt und dadurch das Erntegut nur ungenügend abgestreift wird und oberhalb der Dreschtrommel in einen Umlauf gelangt. Auch wenn eine Dreschleiste gegenüber dem Zwischenraum zwischen zwei benachbarten Förderleisten der Wendetrommel steht, drückt die Dreschleiste der Dreschtrommel Erntegut in den Zwischenraum zwischen zwei benachbarten Förderleisten der Wendetrommelleisten. Aufgrund des sehr großen Spaltes zwischen einer Dreschleiste und der Wendetrommel wird das Erntegut nur unvollständig abgegeben und gelangt dadurch teilweise oberhalb der Dreschtrommel in den Umlauf.

In beiden vorstehend genannten Positionen führt dies zu einer Beeinträchtigung des Dresch- und Fördervorganges und damit zu einer Leistungsverringerung des Mähdreschers.

Der Erfindung liegt die Aufgabe zugrunde, durch eine vorteilhafte Zuordnung einer der Dreschtrommel nachgeordneten Trommel zu der Dreschtrommel eine Optimierung des Dresch- und Fördervorganges für das Erntegut zu erreichen.

Diese Aufgabe wird durch die im Patentanspruch 1 genannten kennzeichnenden Merkmale gelöst.

Weitere vorteilhafte Ausführungen des Erfindungsgegenstandes ergeben sich aus den nachgeordneten Ansprüchen.

Gemäß Anspruch 1 wird vorgeschlagen, dass die Umfangsgeschwindigkeiten benachbarter Trommeln zueinander so synchronisiert sind, dass die Leisten einander benachbarter Trommeln im Wende- und Abstreifbereich eine stets zueinander gegenüberstehenden beziehungsweise eine geringfügig davon abweichende vorbeziehungsweise nacheilende Position aufweisen. Die erfindungsgemäße Zuordnung der Leisten einander benachbarter Trommeln ermöglicht ein weitgehendes Abstreifen des Erntegutes von den Leisten und ein störungsfreies Weiterfördern zu den nachgeordneten Restkornabscheidevorrichtungen. Im Wirkungsbereich der Dreschtrommel wird dadurch die Erntegutmitnahme und dessen Verlauf um die Dreschtrommel sowie der dadurch verursachte Körnerbruch wesentlich reduziert beziehungsweise völlig vermieden. Die Anwendung der Erfindung ist sowohl an Eintrommel- als auch an Mehrtrommeldrescheinrichtungen mit nachgeordneten Strohschüttlern oder rotierenden Restkornabscheidevorrichtungen möglich.

Vorteilhafterweise kann die Position der Leisten (22, 23) der benachbarten Trommeln zueinander in einem Bereich von ca. +/- 10% vor- beziehungsweise nacheilend einstellbar sein.

Insbesondere kann zwischen den benachbarten Trommeln eine mechanische, formschlüssige Antriebsverbindung angeordnet sein. Dies dient dazu, einen schlupffreien Antrieb der benachbarten Trommeln zu gewährleisten, um eine synchrone Umfangsgeschwindigkeit einhalten zu können.

Vorzugsweise kann als formschlüssige Antriebsverbindung zwischen den benachbarten Trommeln ein Zahnriemen oder ein Getriebe angeordnet sein.

Alternativ können die benachbarten Trommeln durch zwei separate, über einen Frequenzumrichter regelbare Elektromotoren antreibbar sein. Diese Antriebsvariante ermöglicht eine einfache Anpassung der jeweiligen Umfangsgeschwindigkeit der benachbarten Trommeln an die verschiedenen Ausführungen von Dreschtrommel und diesen nachgeordneten Trommeln, wie einer Wendetrommel und/oder einer Abscheidetrommel, beispielsweise hinsichtlich ihrer voneinander abweichenden Durchmesser.

Gemäß einer weiteren Ausführungsform können die benachbarten Trommeln hydraulisch antreibbar sein.

Des Weiteren kann die Anzahl der Leisten der mindestens einen der Dreschtrommel nachgeordneten Trommel dem halbzahligen oder ganzzahligen Vielfachen der Anzahl der Dreschleisten der Dreschtrommel entsprechen. Insbesondere bei einem ganzzahligen Vielfachen der Anzahl der Leisten ließe sich eine Reduzierung der Drehzahl der nachgeordneten Trommel erreichen, wodurch der Bruchkornanteil reduziert würde. Hingegen ließe sich bei gleichem Außenumfang der Dreschtrommel und der nachgeordneten Trommel sowie gleicher Leistenanzahl ein übersetzungsfreier Antrieb realisieren, was den zusätzlichen Vorteil hätte, dass auf Grund der Reduzierung der Drehzahl der mindestens einen nachgeordneten Trommel gegenüber einer mit einem Übersetzungsverhältnis angetriebenen, nachgeordneten Trommel, die bei gleicher Anzahl von Leisten eine höhere Drehzahl als die Dreschtrommel aufweist, ebenfalls ein positiver Einfluss auf den Bruchkornanteil erreichen lässt. Gleiches gilt für die Anordnung einer Wendetrommel und einer Abscheidetrommel, die der Dreschtrommel nachgeordnet sein können.

Die Erfindung wird nachstehend an einem Ausführungsbeispiel näher erläutert.

In den zugehörigen Zeichnungen zeigen:
- Fig. 1: eine schematische Längsschnittdarstellung eines Mähdreschers;
- Fig. 2.: einen Querschnitt durch die Drescheinrichtung;

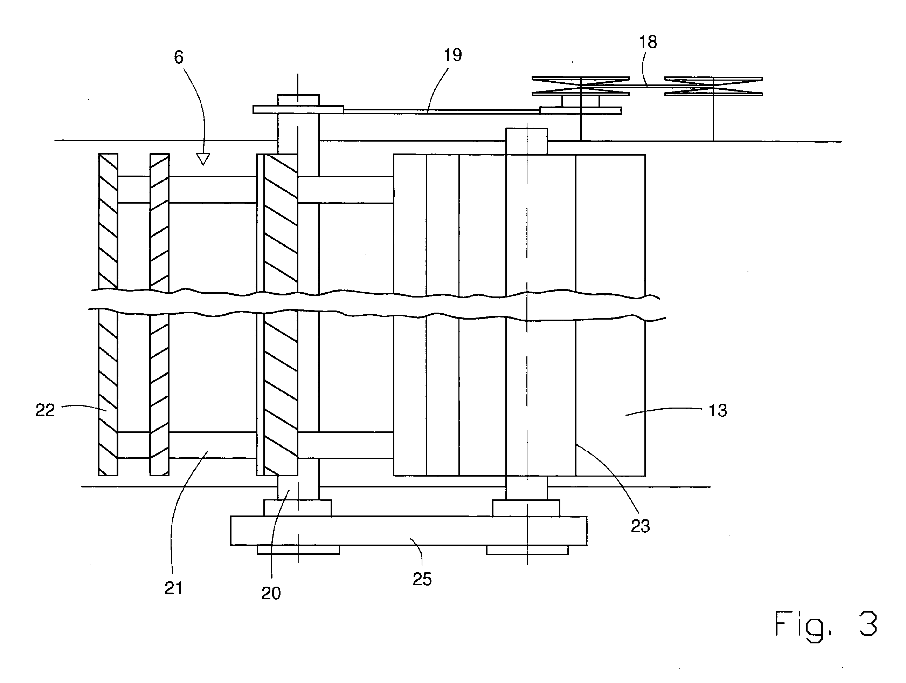

- Fig. 3.: eine Draufsicht auf die Dreschtrommel und die Wendetrommel mit den zugehörigen Antrieben.

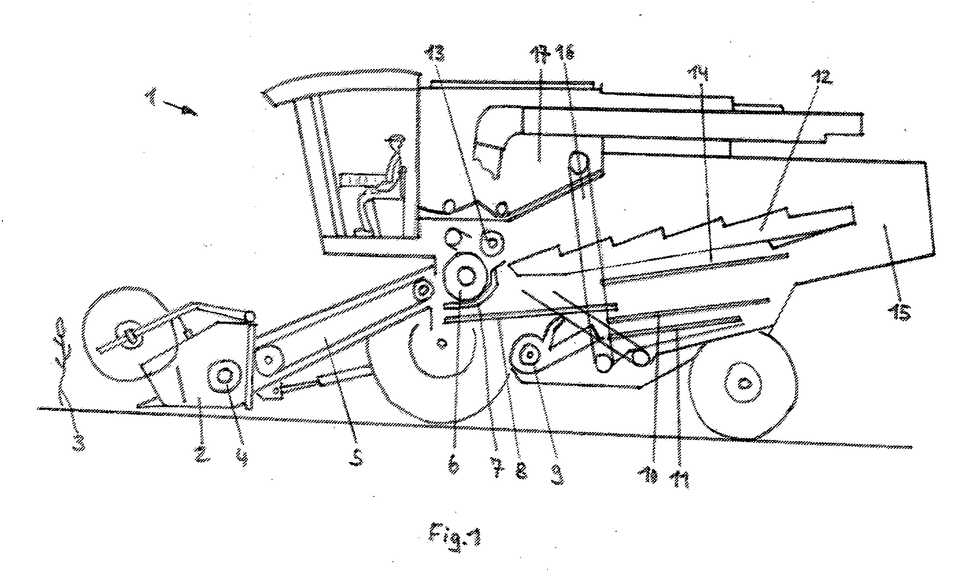

Bei dem in der Fig. 1 dargestellten selbstfahrenden Mähdrescher 1 gelangt das vom Schneidwerk 2 abgeschnittene Erntegut 3 über eine Einzugsförderschnecke 4 und einen schräg nach oben verlaufenden Einzugskanal 5 zu einer nach dem Tangentialprinzip arbeitenden Drescheinrichtung. Diese besteht aus einer Dreschtrommel 6 und aus einem zugeordneten Dreschkorb 7. Zwischen der rotierenden Dreschtrommel 6 und dem feststehenden Dreschkorb 7 erfolgt der Ausdrusch der in den Fruchtständen des Erntegutes 3 befindlichen Körner. Die am Dreschkorb 7 abgeschiedenen Körner gelangen gemeinsam mit dem Kurzstroh und der Spreu über einen Förderboden 8 zu einer Reinigungseinrichtung, die aus einem Gebläse 9 und aus einem Ober- und Untersieb 10; 11 besteht. Zum Ableiten der den Dreschkorb 7 in tangentialer Richtung verlassenden Erntegutbestandteile und zu deren Übergabe an die Strohschüttler 12 ist parallel zu der Dreschtrommel 6 eine entgegen dem Uhrzeigersinn umlaufende Wendetrommel 13 angeordnet. Die auf den Strohschüttlern 12 abgeschiedenen Körner sowie Kurzstrohteile und Spreu werden über einen unterhalb der Strohschüttler 12 schwingend angebrachten Rücklaufboden 14 der Reinigungseinrichtung zugeführt. Die längeren Strohteile werden über die Schüttlerbeläge hinweg in Richtung des Strohauslaufs 15 gefördert und von dort aus auf dem Feldboden im Schwad abgelegt oder von einem Strohhäcksler zerkleinert und anschließend durch eine Verteilvorrichtung auf dem Feld verteilt. Die in der Reinigungseinrichtung abgeschiedenen und gereinigten Körner werden über einen Elevator 16 in den Korntank 17 gefördert. Die Kurzstrohteile und die Spreu werden durch den Druckluftstrom des Gebläses 9 aus dem Mähdrescher 1 zur Ablage auf den Feldboden geleitet.

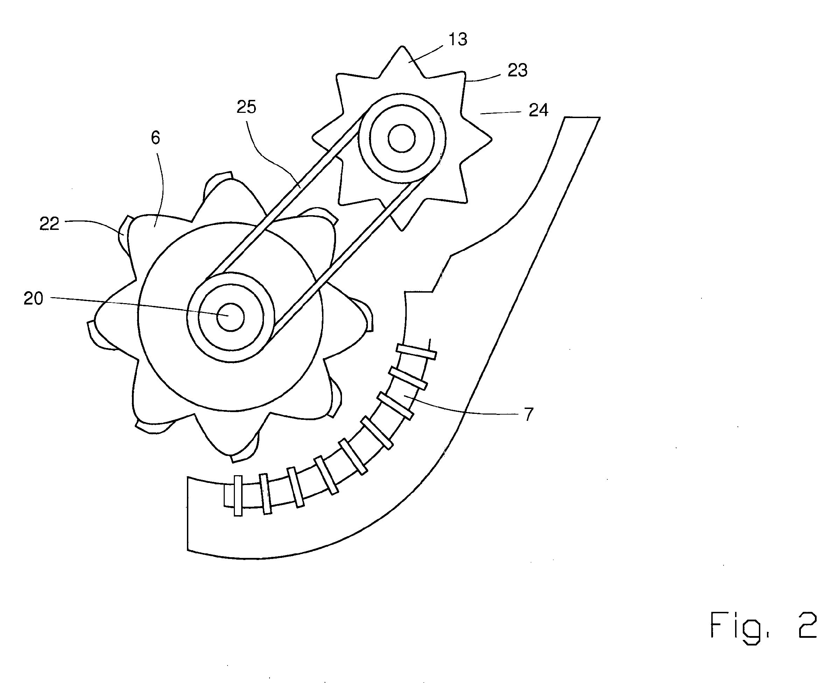

Im Folgenden wird die in der Fig. 2 dargestellte Drescheinrichtung mit der erfindungsgemäßen Zuordnung der Wendetrommel 13 zur Dreschtrommel 6 beschrieben. Auf einer über einen stufenlos regelbaren Keilriemenantrieb 18 und einen sich daran anschließenden weiteren Keilriemenantrieb 19 angetriebenen Dreschtrommelwelle 20 sind über deren Breite mehrere Trommelböden 21 angeordnet. Am äußeren Umfang der profilierten Trommelböden 21 sind mit Abstand zueinander die für den Dreschvorgang erforderlichen gerippten Dreschleisten 22 mittels Schraubverbindungen befestigt. Die der Dreschtrommel 6 zugeordnete Wendetrommel 13 mit einem geschlossenen Trommelkörper ist an ihrem profilierten Umgang mit mehreren längs verlaufenden Förderleisten 23 versehen. Zwischen jeweils zwei benachbarten Förderleisten 23 befinden sich tiefer liegende Zwischenräume 24. Um ein möglichst vollständiges Abstreifen des Erntegutes von der Dreschtrommel 6 und eine optimale Weiterförderung zu den Strohschüttlern 12 zu erreichen, sind die Dreschleisten 22 der Dreschtrommel 6 und die Förderleisten 23 der Wendetrommel 13 so zueinander angeordnet, dass sie im Abstreif- und Wendebereich stets eine einander gegenüberstehende Position aufweisen und die Umfangsgeschwindigkeiten der Dreschtrommel 6 und der Wendetrommel 13 zueinander synchronisiert sind.

Durch diese Zuordnung wird ein vorteilhafter und störungsfreier Erntegutfluss zwischen der Dreschtrommel 6 und den Strohschüttlern 12 erreicht. Da die genaue Positionseinstellung der Dreschleisten 22 zu den Förderleisten 23 zur Gewährleistung der vollen Funktionsfähigkeit während der gesamten Betriebszeit aufrecht erhalten bleiben muss und nicht verändert werden darf, ist zwischen der Dreschtrommel 6 und der Wendetrommel 13 ein schlupffreier Antrieb erforderlich. Dies wird durch eine mechanische, formschlüssige Antriebsverbindung 25, beispielsweise durch einen Zahnriemen oder durch eine Getriebeverbindung erreicht. Nach einer weiteren Ausführungsvariante erfolgt der Antrieb der Dreschtrommel 6 und der Wendetrommel 13 jeweils einzel motorisch über synchron gesteuerte Elektromotoren. Sofern eine funktionsbedingte geringfügige vor- oder nacheilende Position der Förderleisten 23 der Wendetrommel 13 gegenüber den Dreschleisten 22 der Dreschtrommel 6 von ca. +/- 10% erforderlich ist, erfolgt der Antrieb der Dreschtrommel 6 und der Wendetrommel 13 vorzugsweise über zwei separate, über einen Frequenzumrichter regelbare Elektromotoren.

In einfacher Weise lässt sich eine synchrone Umfangsgeschwindigkeit der Dreschtrommel 6 und der dieser nachgeordneten Wendetrommel 13 ereichen, indem die Anzahl der Förderleisten 23 dem halbzahligen oder ganzzahligen Vielfachen der Anzahl der Dreschleisten 22 entspricht. Bei gleicher Anzahl von Dreschleisten 22 und Förderleisten 23, wie in Fig. 2 dargestellt ist, kann der Antrieb der der Dreschtrommel 6 nachgeordneten Wendetrommel 13 im Verhältnis 1:1 erfolgen, sofern auch die Durchmesser der Kreisbahn, auf der sich die Leisten 22, 23 der Dreschtrommel 6 und der nachgeordneten Wendetrommel 13 bewegen, übereinstimmen. Bei einem abweichenden Verhältnis der Anzahl von Dreschleisten 22 und Förderleisten 23 sowie einem variierenden Durchmesserverhältnis muss die Drehzahl der Dreschtrommel 6 und der nachgeordneten Wendetrommel 13 entsprechend im reziproken Verhältnis angepasst werden. Dies ließe sich in besonders einfacher Weise bei einer Verwendung von einzel motorischen Antrieben realisieren.

In der oben beschrieben Weise lassen sich auch mehrere der Dreschtrommel 6 nachgeordnete Trommeln antreiben, deren Umfangsgeschwindigkeiten zueinander synchronisiert werden sollen, beispielsweise bei einer Anordnung von einer Dreschtrommel, einer Wendetrommel und einer der Wendetrommel nachgeordneten Abscheidetrommel. Für diese Konstellation eines Mehrtrommeldreschwerkes wird durch die Synchronisation der Umfangsgeschwindigkeiten in der Weise, dass die Leisten einander benachbarter Trommeln, Dreschtrommel 6 sowie Wendetrommel 13 und eine dieser nachgeordneten Abscheidetrommel, im Wende- und Abstreifbereich eine stets zueinander gegenüberstehenden beziehungsweise eine geringfügig davon abweichende vor- beziehungsweise nacheilende Position aufweisen, der Anteil des oberhalb der Dreschtrommel in den Umlauf zurückgeführten Erntegutes reduziert.

### Bezugszeichenliste:

- 1: Mähdrescher
- 2: Schneidwerk
- 3: Erntegut
- 4: Einzugsförderschnecke
- 5: Einzugskanal
- 6: Dreschtrommel
- 7: Dreschkorb
- 8: Förderboden
- 9: Gebläse
- 10: Obersieb
- 11: Untersieb
- 12: Strohschüttler
- 13: Wendetrommel
- 14: Rücklaufboden
- 15: Strohauslauf
- 16: Elevator
- 17: Korntank
- 18: stufenloser Keilriemenantrieb
- 19: Keilriemenantrieb
- 20: Dreschtrommelwelle
- 21: Trommelböden
- 22: Dreschleisten
- 23: Förderleisten
- 24: Zwischenräume
- 25: Antriebsverbindung

## Patentansprüche

1. Drescheinrichtung für Mähdrescher mit einer Dreschtrommel (6), einem zugeordneten Dreschkorb (7) und wenigstens einer der Dreschtrommel (6) nachgeordneten Trommel (13), die das ausgedroschene Erntegut aus dem Dreschbereich ableitet und es in Richtung einer Restkornabscheidevorrichtung weiterfördert, wobei im Umfangsbereich der Dreschtrommel (6) mit Abstand zueinander Dreschleisten (22) und der mindestens einen nachgeordneten Trommel (13) Leisten (23) angeordnet sind, **dadurch gekennzeichnet, dass** die Umfangsgeschwindigkeiten benachbarter Trommeln (6, 13) zueinander so synchronisiert sind, dass die Leisten (22, 23) einander benachbarter Trommeln (6, 13) im Wende- und Abstreifbereich eine stets zueinander gegenüberstehende beziehungsweise eine geringfügig davon abweichende vorbeziehungsweise nacheilende Position aufweisen.

2. Drescheinrichtung nach Anspruch 1, **dadurch gekennzeichnet, dass** die Position der Leisten (22, 23) der benachbarten Trommeln (6, 13) zueinander in einem Bereich von ca. +/- 10% vor- beziehungsweise nacheilend einstellbar ist.

3. Drescheinrichtung nach Anspruch 1, **dadurch gekennzeichnet, dass** zwischen den benachbarten Trommeln (6, 13) eine mechanische, formschlüssige Antriebsverbindung (25) angeordnet ist.

4. Drescheinrichtung nach Anspruch 3, **dadurch gekennzeichnet, dass** als formschlüssige Antriebsverbindung (25) zwischen den benachbarten Trommel (6, 13) ein Zahnriemen oder ein Getriebe angeordnet ist.

5. Drescheinrichtung nach Anspruch 1, **dadurch gekennzeichnet, dass** die benachbarten Trommeln (6, 13) durch zwei separate, über einen Frequenzumrichter regelbare Elektromotoren antreibbar sind.

6. Drescheinrichtung nach Anspruch 1, **dadurch gekennzeichnet, dass** die benachbarten Trommeln (6, 13) hydraulisch antreibbar sind.

7. Drescheinrichtung nach einem der Ansprüche 1 bis 5, **dadurch gekennzeichnet, dass** die Anzahl der Leisten (23) der der Dreschtrommel (6) nachgeordneten Trommel (13) dem halbzahligen oder ganzzahligen Vielfachen der Anzahl der Dreschleisten (22) der Dreschtrommel (6) entspricht.

## Claims

1. A threshing device for combine harvesters comprising a threshing drum (6), an associated threshing concave (7) and at least one drum (13) which is arranged downstream of the threshing drum (6) and which diverts the threshed crop material out of the threshing region and conveys it further in the direction of a residual grain separating device, wherein arranged in the peripheral region of the threshing drum (6) at a spacing relative to each other are threshing bars (22) and bars (23) on the at least one downstream drum (13), **characterised in that** the peripheral speeds of adjacent drums (6, 13) are so synchronised with each other that in the turning and stripping region the bars (22, 23) of mutually adjacent drums (6, 13) are in a position of always being opposite to each other or a position which slightly deviates therefrom in leading or trailing relationship.

2. A threshing device according to claim 1 **characterised in that** the position of the bars (22, 23) of the adjacent drums (6, 13) relative to each other is adjustable in leading or trailing relationship in a range of about +/-10%.

3. A threshing device according to claim 1 **characterised in that** a mechanical positively locking drive connection (25) is arranged between the adjacent drums (6, 13).

4. A threshing device according to claim 3 **characterised in that** a toothed belt or a transmission is arranged as the positively locking drive connection (25) between the adjacent drums (6, 13).

5. A threshing device according to claim 1 **characterised in that** the adjacent drums (6, 13) are drivable by two separate electric motors regulatable by way of a frequency converter.

6. A threshing device according to claim 1 **characterised in that** the adjacent drums (6, 13) are drivable hydraulically.

7. A threshing device according to one of claims 1 to 5 **characterised in that** the number of bars (23) of the drum (13) downstream of the threshing drum (6) corresponds to the half-integer or whole-integer multiple of the number of threshing bars (22) of the threshing drum (6).

## Revendications

1. Dispositif de battage pour moissonneuse-batteuse, comprenant un tambour batteur (6), un contre-batteur (7) associé et au moins un tambour (13) qui est placé à la suite du tambour batteur (6) et qui évacue le produit de récolte battu de la zone de battage et l'amène à un dispositif de séparation des grains restants, des barres de battage (22) étant disposées à distance les unes des autres dans la zone périphérique du tambour batteur (6), et des barres (23) l'étant dans celle dudit au moins un tambour (13) placé à la suite, **caractérisé en ce que** les vitesses circonférentielles de tambours voisins (6, 13) sont synchronisées de façon que, dans la zone de déviation et de raclage, les barres (22, 23) de tambours voisins (6, 13) soient toujours en face les unes des autres ou présentent un faible décalage en avance ou en retard par rapport à cette position.

2. Dispositif de battage selon la revendication 1, **caractérisé en ce que** la position réciproque des barres (22, 23) des tambours voisins (6, 13) est réglable en avance ou en retard dans une plage d'environ +/- 10 %.

3. Dispositif de battage selon la revendication 1, **caractérisé en ce qu'**une liaison d'entraînement mécanique par complémentarité de forme (25) est disposée entre les tambours voisins (6, 13).

4. Dispositif de battage selon la revendication 3, **caractérisé en ce qu'**une courroie crantée ou un engrenage est disposé entre les tambours voisins (6, 13) en tant que liaison d'entraînement par complémentarité de forme (25).

5. Dispositif de battage selon la revendication 1, **caractérisé en ce que** les tambours voisins (6, 13) peuvent être entraînés par deux moteurs électriques séparés, régulables par un convertisseur de fréquence.

6. Dispositif de battage selon la revendication 1, **caractérisé en ce que** les tambours voisins (6, 13) peuvent être entraînés hydrauliquement.

7. Dispositif de battage selon l'une des revendications 1 à 5, **caractérisé en ce que** le nombre de barres (23) du tambour (13) placé à la suite du tambour batteur (6) correspond à un multiple mi-entier ou entier du nombre de barres de battage (22) du tambour batteur (6).
